# EUROPEAN PATENT APPLICATION

(11) **EP 4 696 984 A1**
(43) Date of publication of application: **18.02.2026**
(21) Application number: 24813881.0
(22) Date of filing: 02.04.2024
(51) Int. Cl.: G01C 21/00, G01S 17/89, G01S 17/86, G06T 7/73

(54) **FUSED MAP CONSTRUCTION METHOD AND APPARATUS, AND ROBOT AND STORAGE MEDIUM**

(30) Priority: 26.05.2023 CN 202310609501
(71) Applicant: Shenzhen Pudu Technology Co., Ltd., Shenzhen, Guangdong 518000 (CN)
(72) Inventor: GONG, Xi, Shenzhen, Guangdong 518000 (CN)
(74) Representative: KIPA AB
(86) International application number: PCT/CN2024/085472
(87) International publication number: WO 2024/244675

(57) **Abstract**

A fused map construction method and apparatus, and a robot and a storage medium. The fused map construction method comprises: acquiring an image frame set collected by an image collection device and a laser pose data set obtained by means of lidar mapping, and on the basis of the laser pose data set, performing an interpolation operation on each image frame in the image frame set, so as to obtain each pose corresponding to each image frame (S100); acquiring a feature matching relationship between adjacent image frames, selecting a key frame set from the image frame set on the basis of the pose corresponding to each image frame, and the feature matching relationship, acquiring an initial map point set corresponding to the key frame set, and constructing a correspondence between each key frame in the key frame set and each initial map point in the initial map point set, so as to obtain a correspondence set (S102); sequentially selecting from the key frame set the current key frame and a related key frame set corresponding to the current key frame, and updating the initial map point set and the correspondence set on the basis of a feature matching relationship between the current key frame and the related key frame set, so as to obtain an updated map point set and an updated correspondence set (S104); and converting the updated map point set into a three-dimensional map point set, and constructing a target fused map on the basis of the three-dimensional map point set, the updated correspondence set, and the pose of each key frame in the correspondence set (S106).

## Description

### CROSS-REFERENCE TO RELATED APPLICATION(S)

The present application claims priority to a Chinese patent application filed with the Chinese Patent Office on May 26, 2023, the application number and name of which are 202310609501.9 and "Fusion Map Construction Method and Apparatus, Robot, and Storage Medium", and the content of all of which is incorporated by reference in the present application.

### FIELD

The present disclosure relates to the technical field of computers, in particularly to a fusion map construction method, a fusion map construction apparatus, a robot, and a storage medium.

### BACKGROUND

The popularity of robots has led to their use in more and more complex scenarios, such as supermarkets, underground parking lots, restaurants, factories, and office buildings. These scenarios include dynamic scenarios and dark scenarios. In the prior art, robots perform operation and localization solely by laser or by visual SLAM (Simultaneous Localization and Mapping), which makes it impossible for the robots to operate normally in multiple scenarios (such as the dynamic scenarios and the dark scenarios), resulting in a smaller range of environments in which the robots can perform operation and localization normally.

### SUMMARY

A fusion map construction method, a fusion map construction apparatus, a robot, and a storage medium are provided according to various embodiments of the present disclosure.

A fusion map construction method, applied to a robot arranged with a laser radar and an image collection device, includes following steps:
obtaining an image frame set collected by the image collection device and a laser pose data set obtained by mapping using the laser radar, and interpolating each image frame in the image frame set based on the laser pose data set to obtain each pose corresponding to each image frame;
obtaining a feature matching relationship between adjacent image frames, selecting a key frame set from the image frame set based on the pose and the feature matching relationship corresponding to each image frame, obtaining an initial map point set corresponding to the key frame set, and constructing a correspondence relationship between each key frame in the key frame set and each initial map point in the initial map point set to obtain a correspondence relationship set;
selecting a current key frame and a related key frame set corresponding to the current key frame in sequence from the key frame set, and updating the initial map point set and the correspondence relationship set based on a feature matching relationship between the current key frame and the related key frame set to obtain an updated map point set and an updated correspondence relationship set; and,
converting the updated map point set into a 3D map point set, and constructing a target fusion map based on the 3D map point set, the updated correspondence relationship set, and a pose of each key frame in the updated correspondence relationship set.

A fusion map construction apparatus, includes:
an interpolation module, configured to: obtain an image frame set collected by an image collection device and a laser pose data set obtained by mapping using a laser radar, and interpolate each image frame in the image frame set based on the laser pose data set to obtain each pose corresponding to each image frame;
a match module, configured to: obtain a feature matching relationship between adjacent image frames, select a key frame set from the image frame set based on the pose and the feature matching relationship corresponding to each image frame, obtain an initial map point set corresponding to the key frame set, and construct a correspondence relationship between each key frame in the key frame set and each initial map point in the initial map point set to obtain a correspondence relationship set;
an update module, configured to: select a current key frame and a related key frame set corresponding to the current key frame in sequence from the key frame set, and update the initial map point set and the correspondence relationship set based on a feature matching relationship between the current key frame and the related key frame set to obtain an updated map point set and an updated correspondence relationship set; and,
a construction module, configured to: convert the updated map point set into a 3D map point set, and construct a target fusion map based on the 3D map point set, the updated correspondence relationship set, and a pose of each key frame in the updated correspondence relationship set.

A robot, arranged with a laser radar and an image collection device, includes a memory and a processor, where the memory stores a computer-readable instruction, and the processor is configured to execute the computer-readable instruction to implement the steps of the method mentioned above.

A computer-readable storage medium, stores a computer program, where the computer program is executed by a processor to implement the steps of the method mentioned above.

Details of one or more embodiments of the present disclosure are set forth in the following drawings and description. Other features and advantages of the present disclosure become apparent from the description, drawings, and claims.

### BRIEF DESCRIPTION OF DRAWINGS

In order to provide a clearer explanation of the technical solutions in the embodiments of the present disclosure or in the prior art, a brief description is given to the accompanying drawings required for the description of the present embodiments or the prior art. Obviously, the accompanying drawings are only some embodiments of the present disclosure. For those ordinary skilled in the art, other drawings can be obtained based on the accompanying drawings without any creative efforts.
FIG. 1 is a schematic diagram of a process of a fusion map construction method in one embodiment.
FIG. 2 is a schematic diagram of a process of pose interpolation in one embodiment.
FIG. 3 is a schematic diagram of a process pf feature matching in one embodiment.
FIG. 4 is a schematic diagram of a process of key frame creation in one embodiment.
FIG. 5 is a schematic diagram of a process of data updating in one embodiment.
FIG. 6 is a schematic diagram of a process of data optimization in one embodiment.
FIG. 7 is a structural block diagram of a fusion map construction apparatus in one embodiment.
FIG. 8 is a diagram showing an internal structure of a robot in one embodiment.

### DETAILED DESCRIPTION OF EMBODIMENTS

In order to facilitate the understanding of the present disclosure, the present disclosure is described more fully below with reference to the related drawings. Some preferred embodiments of the present disclosure are given in the drawings. However, the present disclosure can be implemented in many different forms and is not limited to the embodiments described herein. A purpose of providing these embodiments is to make the understanding of the disclosure of the present disclosure more thorough and comprehensive.

Unless otherwise defined, all technical and scientific terms used herein have the same meaning as those commonly understood by those skilled in the art to which the present disclosure belongs. The terms used herein in the specification of the present disclosure are for a purpose of describing specific embodiments and are not intended to limit the present disclosure. The term "and/or" used herein includes any and all combinations of one or more of associated listed items.

The present disclosure provides a fusion map construction method applied to a robot. The robot is configured to: obtain both an image frame set collected by an image collection device and a laser pose data set obtained by mapping using a laser radar, and interpolate each image frame in the image frame set based on the laser pose data set to obtain each pose corresponding to each image frame; obtain a feature matching relationship between adjacent image frames, select a key frame set from the image frame set based on the pose and the feature matching relationship corresponding to each image frame, obtain an initial map point set corresponding to the key frame set, and construct a correspondence relationship between each key frame in the key frame set and each initial map point in the initial map point set to obtain a correspondence relationship set; select a current key frame and a related key frame set corresponding to the current key frame in sequence from the key frame set, and update the initial map point set and the correspondence relationship set based on a feature matching relationship between the current key frame and the related key frame set to obtain an updated map point set and an updated correspondence relationship set; and convert the updated map point set into a three-dimensional (3D) map point set, and construct a target fusion map based on the 3D map point set, the updated correspondence relationship set, and a pose of each key frame in the updated correspondence relationship set. The robot can be a robot with a function of operational localization, including but not limited to a delivery robot, a cleaning robot, a guide robot, etc.

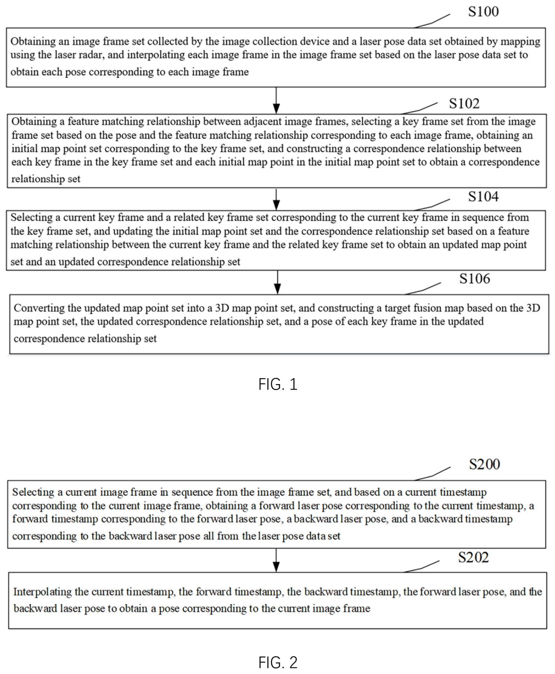

In one embodiment, as shown in FIG. 1, a fusion map construction method is provided, the method is applied to a robot, and the robot is arranged with a laser radar and an image collection device. The method includes:
Step S100, obtaining an image frame set collected by the image collection device and a laser pose data set obtained by mapping using the laser radar, and interpolating each image frame in the image frame set based on the laser pose data set to obtain each pose corresponding to each image frame.

The image collection device refers to a device installed at the robot for taking images, which can be installed at the robot according to a camera's field of view, and an installation direction of the camera may be vertically upward or in any direction. The laser radar is a sensor used to obtain accurate position information. The laser radar carried at the robot may be a two-dimensional (2D) laser radar or a 3D laser radar, which may be carried at a bottom of the robot or in any other position. The present disclosure is explained with the camera installed vertically upward and the laser radar being the 2D laser radar and installed at the bottom of the robot. The image frame set refers to a set of image frames collected by the robot's image collection device, and these image frames have their corresponding timestamps. The laser pose data set refers to a laser pose recorded when the laser radar is used to map, which includes timestamps corresponding to each laser pose, that is, the pose obtained by the robot through mapping using the laser radar at a certain time point. The laser pose data set can be obtained by building a laser map through the open-source laser mapping program Cartographer and keeping the laser pose corresponding to each-frame timestamp. The pose represents position and orientation. Any rigid body can be accurately and uniquely represented by position and orientation in the spatial coordinate system (OXYZ), where the position refers to the x, y, and z coordinates, and the orientation refers to an angle between the rigid body and the OX axis, an angle between the rigid body and the OY axis, and an angle between the rigid body and the OZ axis. The interpolation refers to an operation of calculating the pose corresponding to the image frame through the timestamp corresponding to the laser pose data set and the timestamp corresponding to the image frame.

To achieve visual-and-laser fusion mapping, the image frame set is obtained by the camera carried by the robot, and the recorded laser pose corresponding to each-frame timestamp recorded when the laser map is built using the open-source laser mapping program Cartographer is obtained. That is, the laser pose data set to which trajectories correspond is obtained, where the trajectories are generated in a laser mapping process. According to these trajectories, the laser pose and the timestamp both corresponding to each pair of adjacent two frames in the laser pose data corresponding to the trajectories, and the timestamp corresponding to each image frame in the image frame set, the pose corresponding to each image frame in the image frame set is calculated, so as to provide data support for the realization of the visual-and-laser fusion mapping. In actual scenarios, the 2D laser radar is generally installed at the bottom of the robot, which is extremely susceptible to interference from an dynamic object. It is very difficult to use 2D lasers for localization in underground parking lots or crowded supermarkets. Using visual SLAM for localization allows the field of view of the camera installed at the robot to be vertically upward, which can avoid the interference of the dynamic object and enable the robot to be located in a highly dynamic environment. Furthermore, in low-light environments, such as in a restaurant with lights off, the accuracy of localization using visual is low, while localization using laser can be performed in this dark environment. Therefore, the concept of integrating laser and visual for localization can greatly expand the range of environments in which the robot can be normally operationally located. In addition, the interpolation operation of the laser pose on each image frame in the image frame set provides an important data foundation for the construction of the ultimate laser-and-visual fusion map.

Step S102, obtaining a feature matching relationship between adjacent image frames, selecting a key frame set from the image frame set based on the pose and the feature matching relationship corresponding to each image frame, obtaining an initial map point set corresponding to the key frame set, and constructing a correspondence relationship between each key frame in the key frame set and each initial map point in the initial map point set to obtain a correspondence relationship set.

The feature matching relationship refers to a matching relationship between feature points. The key frame refers to an image frame that can better reflect the characteristics of the image frame and has more representative features. The key frame set refers to a set of the key frames. The initial map point set refers to a set of 2D map points created based on the matched feature points in adjacent image frames, which includes an ID of the key frame corresponding to each initial map point and a pixel coordinate of each initial map point projected on the corresponding key frame. The correspondence relationship set refers to a set used to store correspondence relationships between the initial map points and the key frames, where the initial map point stores a position of the feature point corresponding to each key frame, and each key frame also stores a position of the initial map point corresponding to each feature point in the each key frame. In other words, there is a many-to-one relationship between the feature point and the initial map point, and a many-to-many relationship between the key frame and the initial map point.

In order to better obtain image frames that are significantly different from other image frames, the feature matching relationship between each pair of adjacent image frames can be obtained, and both the pose corresponding to each image frame and the feature matching relationship between each pair of adjacent image frames can be used as a calculation basis in a key frame selecting process. Pose data of the image frame can be used to calculate a change distance between different image frames. When the change distance reaches a certain threshold, it indicates that image information between two image frames is likely to change greatly, and at this time, there are more feature information in the image frames. The feature matching relationship between the image frames can be used to calculate a feature matching rate between the feature points in the image frame. The lower the feature matching rate, the greater the difference in the image information between two images, and at this time, there are more feature information in the image frame. In addition, the key frame includes information that is relatively greatly different from features of other image frames, which better reflects the characteristics of environments in images and plays a better role in the construction of the ultimate fusion map. An image frame corresponding to the latest timestamp when a distance difference between adjacent two image frames is large can be selected from the image frame set as the key frame. The image frame corresponding to the latest timestamp can be understood according to the following example: the adjacent two image frames are a and b, the timestamp corresponding to a is t1, the timestamp corresponding to b is t2, and t1<t2; that is, t2 is closer to the current time, then the image frame b corresponding to t2 is used as the image frame corresponding to the latest timestamp. An image frame corresponding to the latest timestamp when the feature matching rate between adjacent two image frames is less than a preset feature matching rate can also be selected from the image frame set as the key frame, so as to obtain the key frame set consisting of multiple key frames that are selected from the image frame set.

In one embodiment, the construction of the fusion map needs to obtain the corresponding initial map point set. The corresponding initial map points can be built based on the matched feature points in the matching relationship between adjacent image frames, and a correspondence relationship between each initial map point in the initial map point set and each key frame in the key frame set is built (actually a correspondence relationship between the initial map point and each feature point in the key frame is built). That is, each initial map point stores positions of the corresponding feature points in each key frame corresponding to the initial map point, and each key frame stores positions of the initial map points corresponding to each feature point in the key frame, so as to make further data preparation for the construction of the ultimate fusion map.

Step S104, selecting a current key frame and a related key frame set corresponding to the current key frame in sequence from the key frame set, and updating the initial map point set and the correspondence relationship set based on a feature matching relationship between the current key frame and the related key frame set to obtain an updated map point set and an updated correspondence relationship set.

The current key frame refers to a key frame that is selected during a current execution process. The related key frame set refers to a set of key frames with a preset distance from the current key frame. The updated map point set refers to a set of map points obtained after adding new map points and deleting original map points in the initial map point set. The updated correspondence relationship set refers to a correspondence relationship set obtained after updating the correspondence relationship between the initial map point in the initial map point set and the key frame.

When selecting the related key frame set corresponding to the current key frame, a preset distance can be customized, and then all key frames that are the preset distance away from the current key frame can be obtained based on the pose of the key frame. The set of these key frames is the related key frame. For example, if the preset distance is 3m, the related key frame set having a distance of 3m away from the current key frame can be obtained based on the pose of the current key frame. In order to obtain more effective map point information, information of both the initial map point set and the correspondence relationship set can be updated according to the feature matching relationship between the current key frame and the related key frame. That is, the feature point in each key frame can be matched with the feature point corresponding to each related key frame in the related key frame set corresponding to the each key frame, so as to determine the feature matching relationship between each current key frame and the corresponding related key frame, where the feature matching relationship can be used as a basis for determining the update of both the initial map point set and the correspondence relationship set.

The understanding of the feature matching between the current key frame and each related key frame in the related key frame set can be understood by the following example. For example, the current key frame is K, and one related key frame in the related key frame set is P. The feature point corresponding to the current key frame K is matched with the feature point corresponding to the related key frame P to obtain the feature matching relationship between the two key frames. If the feature point k1 in the current key frame K is matched the feature point p1 in the related key frame P, it needs to determined whether the initial map point Q1 corresponding to the feature point k1 is consistent with the initial map point Q2 corresponding to the feature point p1; if they are not consistent, the initial map point Q1 and the initial map point Q2 are merged to generate an updated map point Q3, an updated correspondence relationship between Q3 and the feature point k1, and an updated correspondence relationship between Q3 and the feature p1 (that is, the correspondence relationship between the updated map point Q3 and the current key frame K and the correspondence relationship between the updated map point Q3 and the related key frame P), the initial map points Q1 and Q2 are respectively deleted from the initial map point set and the correspondence relationship set, and the updated map point Q3 is added to the initial map point set and both the updated correspondence relationship between the updated map point Q3 and the feature point k1 and the updated correspondence relationship between the updated map point Q3 and the feature point p1 are added to the correspondence relationship set, thereby obtaining the updated map point set and the updated correspondence relationship set.

Step S106, converting the updated map point set into a 3D map point set, and constructing a target fusion map based on the 3D map point set, the updated correspondence relationship set, and a pose of each key frame in the updated correspondence relationship set.

The 3D map point set refers to map points with 3D positions, which can be calculated by Triangulation technology based on the pose of the key frame corresponding to each map point in the updated map point set and a pixel position of the each map point on the corresponding key frame. The target fusion map refers to a visual map obtained after fusing laser pose data, which is used to realize operation and localization of the robot in various scenarios.

When 3D information corresponding to each updated map point in the updated map point set is not calculated, and the construction of the visual map after fusing the laser pose data is not completed, the Triangulation technology can be used to generate the corresponding 3D map point set based on the pose of the key frame corresponding to each updated map point in the updated map point set and an imaging position (the pixel position) of each updated map point on the corresponding key frame, and optimize, delete, etc. the 3D map points in the 3D map point set. In a process of optimizing and deleting the 3D map point set, the correspondence relationship between the corresponding map point (the map point is also converted into the 3D map point at this time) in the updated correspondence relationship set and the key frame is also updated to obtain a more accurate position of the 3D map point and a more accurate 3D map point having corresponding relationship information with the key frame, and then the target fusion map is obtained, realizing the construction of the fusion visual map by fusing the laser pose and the visual map, and realizing that the target fusion map can be used to control operation and localization of the robot to realize operation and localization of the robot in multiple scenarios.

The above-mentioned fusion map construction method, by interpolating each image frame in the image frame set collected by the image collection device through the laser pose data set obtained by mapping using the laser radar to obtain each pose corresponding to each image frame, selecting the key frame set from the image frame set based on both the pose corresponding to each image frame and the obtained feature matching relationship between adjacent image frames, constructing the correspondence relationship set between each key frame and each initial map point based on the key frame set and the obtained initial map point set, updating the initial map point set and the correspondence relationship set based on the current key frame in the key frame set and the related key frame set corresponding to the current key frame in sequence to obtain the updated map point set and the updated correspondence relationship set, converting the updated map point set into the 3D map point set, and finally constructing the target fusion map (can be configured to control operation and localization of the robot) based on the 3D map point set, the updated correspondence relationship set, and the pose of each key frame in the updated correspondence relationship set, realizes the fusion mapping of the laser pose data and the visual map, and effectively combines the characteristics of the laser map and the visual map, so that the robot can be efficiently and correctly operationally located in multiple scenarios based on the fusion map, thereby expanding the environmental range of the robot's normal operation and localization.

In one embodiment, as shown in FIG. 2, step S100 includes:
Step S200, selecting a current image frame in sequence from the image frame set, and based on a current timestamp corresponding to the current image frame, obtaining a forward laser pose corresponding to the current timestamp, a forward timestamp corresponding to the forward laser pose, a backward laser pose, and a backward timestamp corresponding to the backward laser pose all from the laser pose data set.

The current image frame refers to an initial image frame corresponding to a current interpolation-operation execution process. The timestamp refers to data that can indicate that one piece of data exists and is complete and verifiable before a certain time. The timestamp is generally a character sequence that uniquely identifies the time of one certain moment. The current timestamp refers to a timestamp corresponding to the current image frame. The forward laser pose refers to a laser pose corresponding to one previous timestamp relative to the current timestamp. The forward timestamp refers to the one previous timestamp relative to the current timestamp. The backward laser pose refers to a laser pose corresponding to one next timestamp relative to the current timestamp. The backward timestamp refers to the one next timestamp relative to the current timestamp.

Each image frame in the image frame set is recorded with a corresponding timestamp, and each laser pose in the laser pose data set is also recorded with a corresponding timestamp. Pose information corresponding to identical timestamps in the laser pose data set can be determined according to the timestamp corresponding to the current image frame, that is, the forward laser pose, the forward timestamp corresponding to the forward laser pose, the backward laser pose, and the backward timestamp corresponding to the backward laser pose. The acquisition of these data prepares data for the subsequent calculation of the pose corresponding to each image frame.

Step S202, interpolating the current timestamp, the forward timestamp, the backward timestamp, the forward laser pose, and the backward laser pose to obtain a pose corresponding to the current image frame.

The pose corresponding to each image frame can be calculated based on the current timestamp, the forward laser pose, the forward timestamp corresponding to the forward laser pose, the backward laser pose, and the backward timestamp corresponding to the backward laser pose all corresponding to each image frame. Furthermore, the pose corresponding to the image frame can be regarded as T and the current timestamp corresponding to the image frame can be regarded as t, the forward laser pose can be regarded as T1, the forward timestamp corresponding to the forward laser pose can be regarded as t1, the backward laser pose can be regarded as T2, and the backward timestamp corresponding to the backward laser pose can be regarded as t2, where t1<t<t2, and (T-T1)/(t-t1)=(T2-T1)/(t2-t1), that is, the pose T=T1+(T2-T1)(t-t1)/(t2-t1) corresponding to the image frame, can be obtained through a uniform velocity model, thereby completing the interpolation operation of the current timestamp t, the forward timestamp t1, the backward timestamp t2, the forward laser pose T1, and the backward laser pose T2.

In the above embodiment, the current image frames are selected from the image frame set in sequence, the forward laser pose corresponding to the current timestamp, the forward timestamp corresponding to the forward laser pose, the backward laser pose, and the backward timestamp corresponding to the backward laser pose are obtained from the laser pose data set based on the current timestamp corresponding to the current image frame, and the current timestamp, the forward timestamp, the backward timestamp, the forward laser pose, and the backward laser pose are interpolated to obtain the pose corresponding to the current image frame, completing the operation of interpolating the laser pose into the image frame, realizing the fusion of the laser pose data and the visual image, providing an important data foundation for the subsequent construction of the fused visual map, thereby facilitating operation and localization of the robot in multiple scenarios using the map finally fused, and further facilitating the expansion of the environmental range of the robot's normal operation and localization.

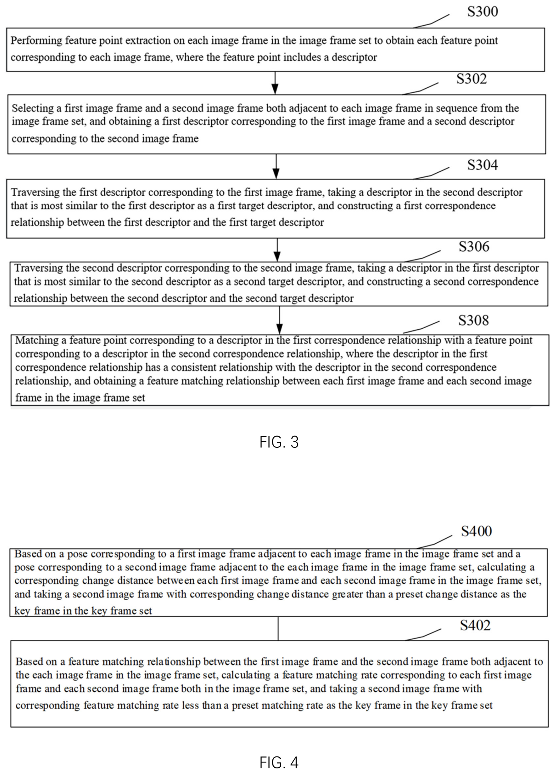

In one embodiment, as shown in FIG. 3, step S102 includes:
Step S300, performing feature point extraction on each image frame in the image frame set to obtain each feature point corresponding to each image frame, where the feature point includes a descriptor.

The feature point extraction refers to an operation of extracting the feature point corresponding to each image frame in the image frame set, which can be extracting ORB (Oriented FAST and Rotated BRIEF) feature points, SIFT (Scale-Invariant Feature Transform) feature points, or other deep-learning feature points. The descriptor is a data structure that describes features. The dimension of one descriptor can be multi-dimensional, which can represent feature point's direction, surrounding pixel information, etc.

Step S302, selecting a first image frame and a second image frame both adjacent to each image frame in sequence from the image frame set, and obtaining a first descriptor corresponding to the first image frame and a second descriptor corresponding to the second image frame.

The first image frame refers to one image frame corresponding to an earlier timestamp in adjacent two image frames. The second image frame refers to the other image frame corresponding to a later timestamp in the adjacent image two frames. The first descriptor refers to a descriptor corresponding to each feature point in the first image frame. The second descriptor refers to a descriptor corresponding to each feature point in the second image frame.

The construction of the fusion map requires the feature matching relationship of each feature point in the image frame as a data basis. The ORB feature point (or SIFT feature point, etc.) corresponding to each image frame can be extracted first to obtain the feature point information of each image frame. In order to select the key frame including more effective image information from the image frame, a corresponding determination can be made based on the feature matching relationship between adjacent image frames to decide which image frame to use as the key frame. In a calculation process of the feature matching relationship between adjacent image frames, the descriptors corresponding to the adjacent two image frames are needed, that is, the first descriptor corresponding to each feature point in the first image frame and the second descriptor corresponding to each feature point in the second image frame are needed, so as to prepare data for subsequent matching of feature points.

Step S304, traversing the first descriptor corresponding to the first image frame, taking a descriptor in the second descriptor that is most similar to the first descriptor as a first target descriptor, and constructing a first correspondence relationship between the first descriptor and the first target descriptor.

The first target descriptor refers to a second descriptor that is most similar to the first descriptor that corresponds to the first image frame. The first correspondence relationship refers to a corresponding relationship between the first descriptor in the first image frame and the first target descriptor in the second image frame.

The feature matching relationship corresponding to the feature points can be constructed based on whether the correspondence relationship between the first descriptor corresponding to the first image frame and the second descriptor corresponding to the second image frame is consistent with the correspondence relationship between the second descriptor corresponding to the second image frame and the first descriptor corresponding to the first image frame. Before this, each first descriptor in the first image frame can be traversed and searched, and at the same time, the second descriptor that is most similar to each first descriptor can be searched in the second image frame, each second descriptor that is most similar to each first descriptor is used as the first target descriptor corresponding to each first descriptor, and then the first correspondence relationship between each first descriptor and each corresponding first target descriptor is constructed, so as to provide comparison data for subsequent determination of whether the feature point in the first image frame is matched with the feature point in the second image frame.

Step S306, traversing the second descriptor corresponding to the second image frame, taking a descriptor in the first descriptor that is most similar to the second descriptor as a second target descriptor, and constructing a second correspondence relationship between the second descriptor and the second target descriptor.

The second target descriptor refers to a first descriptor that is most similar to the second descriptor in a current traversal step. The second correspondence relationship refers to a correspondence relationship between the second descriptor in the second image frame and the second target descriptor corresponding to in the first image frame.

In order to detect whether the correspondence relationship between each first descriptor in the first image frame and each second descriptor in the second image frame is the same as the correspondence relationship between each second descriptor in the second image frame and each first descriptor in the first image frame, each second descriptor in the second image frame can be traversed and searched, and at the same time, the first descriptor that is most similar to each second descriptor can be searched from the first image frame, each first descriptor that is most similar to each second descriptor is used as the second target descriptor corresponding to each second descriptor, and then the second correspondence relationship between each second descriptor in the second image frame and the corresponding second target descriptor is constructed, so as to provide a comparison basis for subsequent determination of whether the feature point in the first image frame is matched the feature point in the second image frame.

Step S308, matching a feature point corresponding to a descriptor in the first correspondence relationship with a feature point corresponding to a descriptor in the second correspondence relationship, where the descriptor in the first correspondence relationship has a consistent relationship with the descriptor in the second correspondence relationship, and obtaining a feature matching relationship between each first image frame and each second image frame in the image frame set.

When the first correspondence relationship and the second correspondence relationship are consistent, it indicates that the feature points corresponding to the descriptors are matched, and then the feature points corresponding to each descriptor that has a consistent correspondence relationship are matched to obtain the feature matching relationship between each first image frame and each second image frame in the image frame set. Furthermore, the adjacent first image frame can be regarded as P1, the second image frame can be regarded as P2, the first descriptor corresponding to the first image frame P1 can be regarded as d1, the second descriptor corresponding to the second image frame P2 can be regarded as d2, the second descriptor d2 that is most similar to the first descriptor d1 can be searched from the second image frame P2, and the first correspondence relationship between the first descriptor d1 in the first image frame P1 and the second descriptor d2 in the second image frame P2 can be constructed. For example, the first correspondence relationship includes "d1_1-d2_1, d1_3-d2_3" (d1_1 and d1_3 are the first descriptors in the first image frame, and d2_1 and d2_3 are the second descriptors in the second image frame. Similarly, as long as there is d1_, they are all the first descriptors in the first image frame, and as long as there is d2_, they are all the second descriptors in the second image frame); conversely, the first descriptor d1 that is most similar to the second descriptor d2 is searched from the image frame P1, and the second correspondence relationship between the second descriptor d2 in the second image frame P2 and the first descriptor d2 in the first image frame P1 is constructed. For example, if the second correspondence relationship includes "d2_1-d1_5, d2_3-d1_3", it can be seen from above correspondence relationship example that the first correspondence relationship "d1_1-d2_1" is inconsistent with the second correspondence relationship "d2_1-d1_5", so that the feature matching relationship between the feature point corresponding to the first descriptor d1_1 and the feature point corresponding to the second descriptor d2_1 is not constructed. The first correspondence relationship "d1_3-d2_3" is consistent with the second correspondence relationship "d2_3-d1_3", so that the feature matching relationship between the feature point corresponding to the first descriptor d1_3 and the feature point corresponding to the second descriptor d2_3 is constructed.

In the above embodiment, the feature point of each image frame in the image frame set is extracted to obtain each feature point including descriptors and corresponding to each image frame. Each descriptor in the adjacent first image frame and second image frame is traversed in sequence to construct a first correspondence relationship between each first descriptor in the first image frame and each corresponding first target descriptor in the second image frame, and a second correspondence relationship between each second descriptor in the second image frame and each corresponding second target descriptor in the first image frame. Based on the comparison between the first correspondence relationship and the second correspondence relationship, each feature point in the first image frame is matched with each feature point in the second image frame to obtain the corresponding feature matching relationship between each first image frame and each second image frame both in the image frame set, thereby achieving the feature point matching of adjacent image frames and constructing the feature matching relationship between feature points corresponding to adjacent image frames. This provides a data basis for the creation of the key frames and the map point in subsequent processes, and improves the execution efficiency of constructing the visual map that is fused with the laser pose data to a certain extent.

In one embodiment, as shown in FIG. 4 , step S102 further includes:
Step S400, based on a pose corresponding to a first image frame adjacent to each image frame in the image frame set and a pose corresponding to a second image frame adjacent to the each image frame in the image frame set, calculating a corresponding change distance between each first image frame and each second image frame in the image frame set, and taking a second image frame with corresponding change distance greater than a preset change distance as the key frame in the key frame set.

The change distance refers to a distance between adjacent image frames, and the preset change distance refers to a value set when defining the key frame.

The selection of the key frame mainly considers whether there is a larger feature information gap between adjacent image frames. The change distance between adjacent image frames can be calculated based on the poses corresponding to adjacent image frames. The larger the change distance, the more the feature points with differences in image, and the more changes in the individual characteristics and special characteristics between image frames. At this time, a corresponding preset change distance can be set. When the change distance between adjacent image frames exceeds the preset change distance, the second image frame can be used as the key frame in the key frame set. For example, the change distance between the adjacent first image frame P1 and second image frame P2 is 1m, and the preset change distance is 0.5m. The change distance 1m is greater than the preset change distance 0.5m, which indicates that the second image frame P2 can be used as the key frame.

Step S402, based on a feature matching relationship between the first image frame and the second image frame both adjacent to the each image frame in the image frame set, calculating a feature matching rate corresponding to each first image frame and each second image frame both in the image frame set, and taking a second image frame with corresponding feature matching rate less than a preset matching rate as the key frame in the key frame set.

The feature matching rate refers to a matching probability of the feature points of adjacent two frames, which can be obtained by dividing the number of matched feature points by the total number of feature points corresponding to the first image frame. The preset matching rate refers to a probability value set for determining the key frame, which can be set according to actual conditions.

For the creation of the key frame, the feature matching rate corresponding to each first image frame and second image frame in the image frame set can be determined based on the feature matching relationship corresponding to each first image frame and second image frame in the image frame set, and then the second image frame with its corresponding feature matching rate greater than the preset feature matching rate can be used as the key frame in the key frame set.

In the above embodiment, the change distance corresponding to each first image frame and second image frame in the image frame set is calculated based on the pose corresponding to the first image frame adjacent to each image frame in the image frame set and the pose corresponding to the second image frame adjacent to the each image frame in the image frame set, and the second image frame with its corresponding change distance greater than the preset change distance is used as the key frame in the key frame set; or, the feature matching rate corresponding to each first image frame and second image frame in the image frame set is calculated based on the feature matching relationship corresponding to the first image frame and second image frame adjacent to each image frame in the image frame set, and the second image frame with its corresponding feature matching rate less than the preset matching rate is used as the key frame in the key frame set, thereby realizing the creation of the key frame. The double-dimensional consideration of the creation of the key frame can better obtain more useful information in the key frame, which is conducive to creating the target fusion map that can locate actual environments more accurately.

In one embodiment, step S402 includes:
counting a quantity of matched feature points corresponding to each image frame based on the feature matching relationship between the first image frame and the second image frame both adjacent to each image frame in the image frame set; and,
calculating the feature matching rate corresponding to the first image frame and the second image frame both adjacent to each image frame based on a total quantity of the feature points corresponding to the first image frame corresponding to the image frame and the quantity of the matched feature points corresponding to the image frame.

The quantity of the matched feature points refers to the number of matched feature points between the first image frame and the second image frame both adjacent to the image frame. The total quantity of the feature points refers to the total number of feature points corresponding to the first image frame.

According to the feature matching relationship corresponding to each first image frame and second image frame in the image frame set, the number of matched feature points corresponding to adjacent image frames is counted and divided by the total number of feature points corresponding to the first image frame in the adjacent image frames to obtain the feature matching rate corresponding to each first image frame and second image frame in the image frame set.

In the above embodiment, by counting the number of matched feature points corresponding to the image frame and the total number of feature points corresponding to the image frame, based on the ratio of the number of matched feature points to the total number of feature points, the feature matching rate can be quickly and accurately obtained, thereby improving the efficiency of constructing the fusion map.

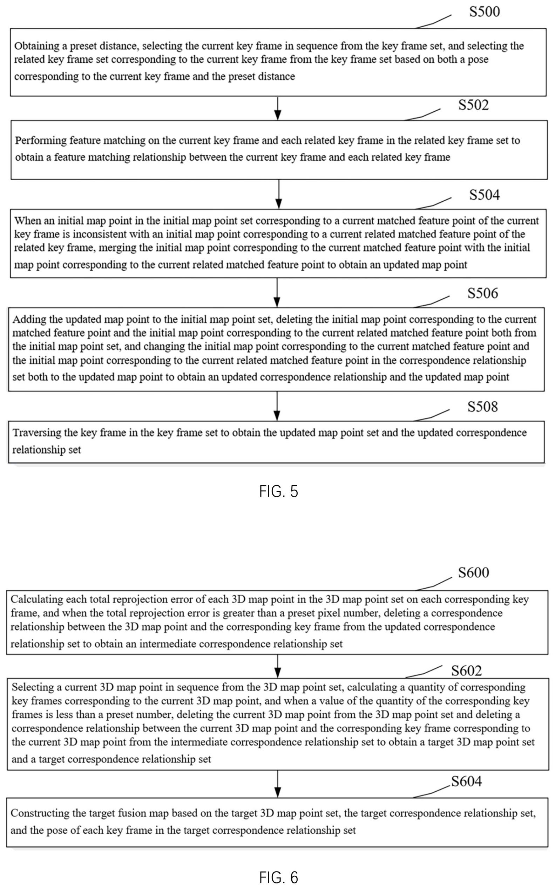

In one embodiment, as shown in FIG. 5 , step S104 includes:
Step S500, obtaining a preset distance, selecting the current key frame in sequence from the key frame set, and selecting the related key frame set corresponding to the current key frame from the key frame set based on both a pose corresponding to the current key frame and the preset distance.

The preset distance refers to a distance set for selecting the key frames around the current key frame.

Step S502, performing feature matching on the current key frame and each related key frame in the related key frame set to obtain a feature matching relationship between the current key frame and each related key frame.

The key frame includes more useful information about environmental changes. The corresponding preset distance can be determined according to actual situations. Based on the pose corresponding to the current key frame, the related key frame that is the preset distance away from the current key frame is searched. There may be large differences in image information between different key frames. By comparing the related key frame that is the preset distance away from the current key frame with the current key frame, it facilitates optimizing the image that is fused with the laser pose, thereby improving the effectiveness of the fusion map information in the final obtained target fusion map.

Step S504, when an initial map point in the initial map point set corresponding to a current matched feature point of the current key frame is inconsistent with an initial map point corresponding to a current related matched feature point of the related key frame, merging the initial map point corresponding to the current matched feature point with the initial map point corresponding to the current related matched feature point to obtain an updated map point.

The current matched feature point refers to a feature point in the current related key frame being traversed in the current traversal step. The current related matched feature point refers to a feature point in the related key frame being traversed in the current traversal step.

When the initial map point corresponding to the current matched feature point is inconsistent with the initial map point corresponding to the current related matched feature point, the two inconsistent initial map points can be merged to generate the corresponding updated map point. For example, the current key frame is K, the related key frame in the related key frame set is P. When initial map point corresponding to the current matched feature point k1 in the current key frame K is inconsistent with the initial map point corresponding to the current related matched feature point p2 in the related key frame P, the initial map point corresponding to the current matched feature point k1 is Q1, the initial map point corresponding to the current related matched feature point p2 is Q2, the correspondence relationship between the initial map point Q1 and the current matched feature point k1 and the correspondence relationship between the initial map point Q2 and the current related matched feature point p2 are "Q1<->k1, Q2<->p2", then the initial map point Q1 and the initial map point Q2 can be merged to generate the corresponding updated map point Q3, where "<->" refers to a bidirectional correspondence relationship.

Step S506, adding the updated map point to the initial map point set, deleting the initial map point corresponding to the current matched feature point and the initial map point corresponding to the current related matched feature point both from the initial map point set, and changing the initial map point corresponding to the current matched feature point and the initial map point corresponding to the current related matched feature point in the correspondence relationship set both to the updated map point to obtain an updated correspondence relationship and the updated map point.

The newly generated updated map point can be added to the initial map point set, and the initial map points to which the current matched feature point does not correspond and the current related matched feature point does not correspond can be deleted from the initial map point set to update the initial map point set and obtain the updated map point set. In addition, the correspondence relationship between the updated map point and the corresponding key frame and the correspondence relationship between the updated map point set and the feature point in the key frame both can be changed in the correspondence relationship set to update the correspondence relationship between the updated map point and the corresponding key frame. According to the example described in step S504, it can be further understood that when the updated map point Q3 is added to the initial map point set, and the initial map point Q1 and the initial map point Q2 are deleted from the initial map point set, the correspondence relationship between the map points (including the initial map points Q1 and Q2, and the updated map point Q3) and the feature points (including the current matched feature point k1 and the current related matched feature point p2) also needs to be changed, from the original "Q1<->k1, Q2<->p2" to "Q3<->k1 and p2". The change in the correspondence relationship between the feature point and the map point also represents the change in the correspondence relationship between the map point and the corresponding key frame, thereby realizing the update of the initial map point and the correspondence relationship.

Step S508, traversing the key frame in the key frame set to obtain the updated map point set and the updated correspondence relationship set.

In the above embodiment, by selecting the related key frame set corresponding to the current key frame based on the preset distance and the pose corresponding to the current key frame, and performing feature matching on the current key frame and each related key frame in the related key frame set, the feature matching relationship that can be used as a basis for optimizing the key frame and the initial map point is obtained. When the initial map point corresponding to the current matched feature point corresponding to the current key frame is inconsistent with the initial map point corresponding to the current related matched feature point corresponding to the related key frame, the initial map point corresponding to the current matched feature point is merged with the initial map point corresponding to the current related matched feature point, the updated map point is added to the initial map point set, the initial map point corresponding to the current matched feature point and the initial map point corresponding to the current related matched feature point are deleted from the initial map point set, the initial map point corresponding to the current matched feature point in the correspondence relationship set and the initial map point corresponding to the current related matched feature point are changed to the updated map point to obtain the updated correspondence relationship and the updated map point, and the key frame in the key frame set is repeatedly traversed until the updated map point set and the updated correspondence relationship set are obtained, thereby realizing the update of the initial map point set and the correspondence relationship set, making data information in the updated map point set and the updated correspondence relationship set more accurate, and further facilitating improving the accuracy of constructing the fusion map by fusing the laser pose and the visual map, so that the fusion map can better integrate the corresponding functionality of the laser map and the visual map, and the robot can be located in corresponding scenario environments during laser localization and visual localization according to the fusion map, thereby facilitating expanding the environmental range of the robot during normal operation to a certain extent.

In one embodiment, step S106 includes: based on a pose of the key frame corresponding to each updated map point in the updated map point set and the pixel coordinate of each updated map point on the corresponding key frame, converting the updated map point set into the 3D map point set.

The pixel position refers to a pixel coordinate of the updated map point on the corresponding key frame.

The map point in the updated map point set is still a map point in 2D positions. Through Triangulation technology, according to the pose of the key frame corresponding to each updated map point and the pixel coordinate of each updated map point on the corresponding key frame, the 3D map point corresponding to each updated map point can be calculated and generated, thereby providing a data basis for the subsequent generation of the target fusion map.

In the above embodiment, the updated map point set is converted into the 3D map point set based on the pose of the key frame corresponding to each updated map point in the updated map point set and the pixel coordinate of each updated map point on the corresponding key frame, thereby realizing the creation of the 3D map point set, which provides an important data basis for the subsequent generation of the final target fusion map.

In one embodiment, as shown in FIG. 6, step S106 includes:
Step S600, calculating each total reprojection error of each 3D map point in the 3D map point set on each corresponding key frame, and when the total reprojection error is greater than a preset pixel number, deleting a correspondence relationship between the 3D map point and the corresponding key frame from the updated correspondence relationship set to obtain an intermediate correspondence relationship set.

The total reprojection error refers to an error generated between reprojection and first projection of the 3D map point on the corresponding key frame. The preset pixel number refers to a value defined for determining the accuracy of the 3D map point. The intermediate correspondence relationship set refers to a correspondence relationship set obtained after deleting the correspondence relationship between the 3D map point and the key frame in the updated correspondence relationship set.

In order to obtain more accurate position information of the 3D map point, a position corresponding to each 3D map point can be reprojected onto the corresponding key frame, and a corresponding reprojection point can be recorded. The reprojection point is compared with the feature point corresponding to the 3D map point. If the reprojection point is consistent with the feature point, it indicates that there is almost no error between the reprojection point and the feature point, and then the total reprojection error of each 3D map point on each corresponding key frame is calculated. To obtain more accurate position information of the 3D map point, the corresponding preset pixel number can be set according to specific needs. When the total reprojection error is less than or equal to the preset pixel number, it indicates that the 3D position information corresponding to the 3D map point is more accurate; when the total reprojection error is greater than the preset pixel number, it indicates that the 3D position information corresponding to the 3D map point is too different from actual information. If the 3D map point whose position information is greatly different from actual information is used, it may have an adverse effect on operation and localization of the robot. Therefore, the correspondence relationship between the corresponding 3D map point and the corresponding key frame when the total reprojection error is greater than the preset pixel number can be deleted from the updated correspondence relationship set, that is, the correspondence relationship between the 3D map point and the feature point in the corresponding key frame is deleted, and data information of the deleted correspondence relationship is no longer used in the control of operation and localization of the robot, thereby avoiding the interference of invalid data.

Step S602, selecting a current 3D map point in sequence from the 3D map point set, calculating a quantity of corresponding key frames corresponding to the current 3D map point, and when a value of the quantity of the corresponding key frames is less than a preset number, deleting the current 3D map point from the 3D map point set and deleting a correspondence relationship between the current 3D map point and the corresponding key frame corresponding to the current 3D map point from the intermediate correspondence relationship set to obtain a target 3D map point set and a target correspondence relationship set.

The current 3D map point refers to a 3D map point selected from the 3D map point set during the current execution process. The quantity of the corresponding key frames refers to the number of key frames corresponding to the 3D map point. The preset number refers to a value used to determine the deletion of the 3D map point and the corresponding key frames. The target correspondence relationship set refers to data information of the correspondence relationship between the 3D map point and the key frame required to construct the final target fusion map.

When the quantity of the key frames corresponding to the 3D map point are lesser, the accuracy of key information that can be obtained is not guaranteed. At this time, map data information obtained may cause the robot to have low accuracy in operation and localization in multiple scenarios. Therefore, the quantity of the key frames corresponding to each 3D map point (i.e., the number of the corresponding key frames) is calculated, the preset number determined according to actual needs is compared with the quantity of the corresponding key frames, the current 3D map point whose quantity of corresponding key frames are less than the preset number is deleted from the 3D map point set, and the correspondence relationship between the current 3D map point and the key frame corresponding to the current 3D map point is deleted from the intermediate correspondence relationship set, thereby appropriately deleting some data information that affects the accuracy of information corresponding to the final generated target fusion map, so as to obtain the target 3D map point set and the target correspondence relationship set with higher accuracy.

Step S604, constructing the target fusion map based on the target 3D map point set, the target correspondence relationship set, and the pose of each key frame in the target correspondence relationship set.

After layers of information optimization, the accuracy of the target 3D map point set, the target correspondence relationship set, and the data information of the pose of each key frame in the target correspondence relationship set are all high. The combination of these data can make the constructed target fusion map closer to localization environments of actual scenarios, so that the robot applied with the target fusion map can be accurately and efficiently operationally located in multiple scenarios.

In the above embodiment, by comparing each calculated total projection error corresponding to each 3D map point with the preset pixel number, the correspondence relationship between the 3D map point and the corresponding key frame is optimized, thereby obtaining the intermediate correspondence relationship set with more accurate data information; then, the number of the corresponding key frames corresponding to each 3D map point is compared with the preset number, and the 3D map point associated with lesser key frames and the correspondence relationship between the 3D map point associated with lesser key frames and the key frame corresponding to the 3D map point are deleted from the 3D map point set and the intermediate correspondence relationship set respectively, thereby achieving further optimization of data information and obtaining the target 3D map point set and target correspondence relationship set with higher accuracy. The target 3D map point set with higher data information accuracy, the target correspondence relationship set with higher data information accuracy, and the pose of each key frame in the target correspondence relationship set with higher data information accuracy are used to construct the target fusion map, so that data information corresponding to the constructed target fusion map is closer to actual scenarios, and the accuracy of data information localization of the constructed target fusion map is higher, thereby ensuring that the robot can be accurately and efficiently operationally located in multiple scenarios when the robot is applied with the target fusion map, which greatly expands the environmental range of normal operation of the robot.

In one embodiment, the laser pose data obtained by the robot through the 2D laser radar in a dark scenario can be used as the laser pose data set, and image data collected by the camera when visual SLAM is used for locating in a high dynamic environment can be used as the image frame set. Through the obtained image frame set and the obtained laser pose data set, an interpolation operation is performed on each image frame in the image frame set based on the laser pose data set to obtain each pose corresponding to each image frame. The feature matching relationship between adjacent image frames is obtained, the key frame set is selected from the image frame set based on the pose corresponding to each image frame and the feature matching relationship, the initial map point set corresponding to the key frame set is obtained, and the correspondence relationship between each key frame in the key frame set and each initial map point in the initial map point set is constructed to obtain the correspondence relationship set. The current key frame and the related key frame set corresponding to the current key frame are sequentially selected from the key frame set. Based on the feature matching relationship between the current key frame and the related key frame set, the initial map point set and the correspondence relationship set are updated to obtain the updated map point set and the updated correspondence relationship set. Based on Triangulation technology, the updated map point set is converted into the 3D map point set, and then the target fusion map that integrates the laser pose data and the visual map data is constructed based on the 3D map point set, the updated correspondence relationship set, and the pose of each key frame in the updated correspondence relationship set, so that the robot can be applied with the target fusion map to efficiently and accurately operationally located in dark environments and high dynamic environments, thereby effectively avoiding the problem that the robot is interfered by dynamic objects when only laser localization is performed, and cannot be correctly operationally located in dark environments when only visual localization is performed, which greatly expands the operational environments of the robot and the environmental range of normal operation and localization of the robot.

In one embodiment, step S600 includes:
reprojecting the 3D map point in the 3D map point set onto each corresponding key frame to obtain a reprojection point corresponding to the 3D map point; and,
counting reprojection errors of the 3D map point on each key frame to obtain each total projection error of the 3D map point on the corresponding key frame.

The position corresponding to each 3D map point in the 3D map point set is reprojected onto each corresponding key frame, and the corresponding reprojection point is recorded. The reprojection point is compared with the feature point corresponding to the 3D map point to obtain the reprojection error of each 3D map point on each key frame. The reprojection errors of the same 3D map point on each key frame are summed to obtain the total projection error of each 3D map point on each corresponding key frame.

In the above embodiment, by comparing the reprojected point with the feature point corresponding to the 3D map point, the reprojection error corresponding to each 3D map point on each key frame is obtained. The reprojection errors of the same 3D map point on each key frame are counted, so that each total projection error of each 3D map point on each key frame can be quickly and accurately determined, thereby improving the efficiency of constructing the fusion map.

It should be understood that, although the steps in the flow charts involved in the above-mentioned embodiments are displayed in sequence according to the indication of the arrows, these steps are not necessarily executed in sequence according to the orders indicated by the arrows. Unless there is a clear explanation in the present disclosure otherwise, the execution of these steps does not have a strict order restriction, and these steps may be executed in other orders. Moreover, at least a part of these steps in the flow charts involved in the above-mentioned embodiments can include multiple steps or multiple stages, and these steps or stages are not necessarily executed at the same time, but can be executed at different times, and the execution order of these steps or stages is not necessarily to be carried out in sequence, but may be executed in turn or alternately with other steps or at least a part of the steps or stages in other steps.

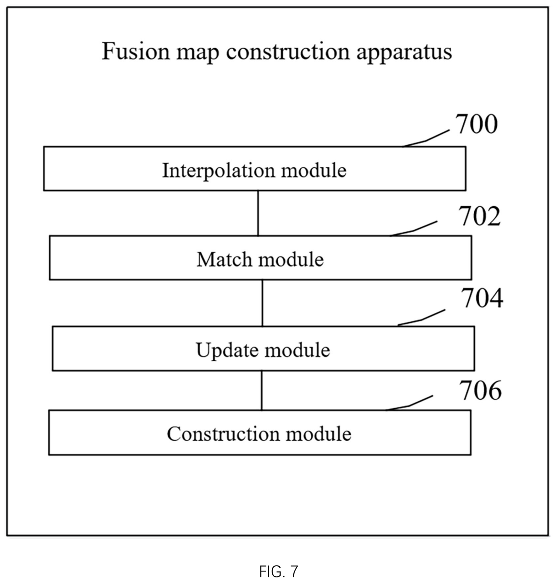

In one embodiment, as shown in FIG. 7 , a fusion map construction apparatus is provided. The apparatus may be a software module, or a hardware module, or a combination of the two, to form a part of the robot. The apparatus includes: an interpolation module 700, a match module 702, an update module 704, and a construction module 706.

The interpolation module 700 is configured to: obtain an image frame set collected by an image collection device and a laser pose data set obtained by mapping using a laser radar, and interpolate each image frame in the image frame set based on the laser pose data set to obtain each pose corresponding to each image frame.

The match module 702 is configured to: obtain a feature matching relationship between adjacent image frames, select a key frame set from the image frame set based on the pose and the feature matching relationship corresponding to each image frame, obtain an initial map point set corresponding to the key frame set, and construct a correspondence relationship between each key frame in the key frame set and each initial map point in the initial map point set to obtain a correspondence relationship set.

The update module 704 is configured to: select a current key frame and a related key frame set corresponding to the current key frame in sequence from the key frame set, and update the initial map point set and the correspondence relationship set based on a feature matching relationship between the current key frame and the related key frame set to obtain an updated map point set and an updated correspondence relationship set.

The construction module 706 is configured to: convert the updated map point set into a 3D map point set, and construct a target fusion map based on the 3D map point set, the updated correspondence relationship set, and a pose of each key frame in the updated correspondence relationship set.

In the above embodiment, by interpolating each image frame in the image frame set collected by the image collection device through the laser pose data set obtained by mapping using the laser radar to obtain each pose corresponding to each image frame, selecting the key frame set from the image frame set based on both the pose corresponding to each image frame and the obtained feature matching relationship between adjacent image frames, constructing the correspondence relationship set between each key frame and each initial map point based on the key frame set and the obtained initial map point set, updating the initial map point set and the correspondence relationship set based on the current key frame in the key frame set and the related key frame set corresponding to the current key frame in sequence to obtain the updated map point set and the updated correspondence relationship set, converting the updated map point set into the 3D map point set, and finally constructing the target fusion map (can be configured to control the operation and localization of the robot) based on the 3D map point set, the updated correspondence relationship set, and the pose of each key frame in the updated correspondence relationship set, realizes the fusion mapping of the laser pose data and the visual map, and effectively combines the characteristics of the laser map and the visual map, so that the robot can be efficiently and correctly operationally located in multiple scenarios based on the fusion map, thereby expanding the environmental range of the robot's normal operation and localization.

In one embodiment, the interpolation module 700 is further configured to: select a current image frame in sequence from the image frame set, and based on a current timestamp corresponding to the current image frame, obtain a forward laser pose corresponding to the current timestamp, a forward timestamp corresponding to the forward laser pose, a backward laser pose, and a backward timestamp corresponding to the backward laser pose all from the laser pose data set; and interpolate the current timestamp, the forward timestamp, the backward timestamp, the forward laser pose, and the backward laser pose to obtain a pose corresponding to the current image frame.

In one embodiment, the match module 702 is further configured to: perform feature point extraction on each image frame in the image frame set to obtain each feature point corresponding to each image frame, where the feature point includes a descriptor; select a first image frame and a second image frame both adjacent to each image frame in sequence from the image frame set, and obtain a first descriptor corresponding to the first image frame and a second descriptor corresponding to the second image frame; traverse the first descriptor corresponding to the first image frame, take a descriptor in the second descriptor that is most similar to the first descriptor as a first target descriptor, and construct a first correspondence relationship between the first descriptor and the first target descriptor; traverse the second descriptor corresponding to the second image frame, take a descriptor in the first descriptor that is most similar to the second descriptor as a second target descriptor, and construct a second correspondence relationship between the second descriptor and the second target descriptor; and match a feature point corresponding to a descriptor in the first correspondence relationship with a feature point corresponding to a descriptor in the second correspondence relationship, where the descriptor in the first correspondence relationship has a consistent relationship with the descriptor in the second correspondence relationship, and obtain a feature matching relationship between each first image frame and each second image frame in the image frame set.

In one embodiment, the match module 702 is further configured to: based on a pose corresponding to a first image frame adjacent to each image frame in the image frame set and a pose corresponding to a second image frame adjacent to the each image frame in the image frame set, calculate a corresponding change distance between each first image frame and each second image frame in the image frame set, and take a second image frame with corresponding change distance greater than a preset change distance as the key frame in the key frame set; or,
based on a feature matching relationship between the first image frame and the second image frame both adjacent to the each image frame in the image frame set, calculate a feature matching rate corresponding to each first image frame and each second image frame both in the image frame set, and take a second image frame with corresponding feature matching rate less than a preset matching rate as the key frame in the key frame set.

In one embodiment, the match module 702 is further configured to: count a quantity of matched feature points corresponding to each image frame based on the feature matching relationship between the first image frame and the second image frame both adjacent to each image frame in the image frame set; and calculate the feature matching rate corresponding to the first image frame and the second image frame both adjacent to each image frame based on a total quantity of the feature points corresponding to the first image frame corresponding to the image frame and the quantity of the matched feature points corresponding to the image frame.

In one embodiment, the update module 704 is further configured to: obtain a preset distance, select the current key frame in sequence from the key frame set, and select the related key frame set corresponding to the current key frame from the key frame set based on both a pose corresponding to the current key frame and the preset distance; perform feature matching on the current key frame and each related key frame in the related key frame set to obtain a feature matching relationship between the current key frame and each related key frame; when an initial map point in the initial map point set corresponding to a current matched feature point of the current key frame is inconsistent with an initial map point corresponding to a current related matched feature point of the related key frame, merge the initial map point corresponding to the current matched feature point with the initial map point corresponding to the current related matched feature point to obtain an updated map point; add the updated map point to the initial map point set, delete the initial map point corresponding to the current matched feature point and the initial map point corresponding to the current related matched feature point both from the initial map point set, and change the initial map point corresponding to the current matched feature point and the initial map point corresponding to the current related matched feature point in the correspondence relationship set both to the updated map point to obtain an updated correspondence relationship and the updated map point; and traverse the key frame in the key frame set to obtain the updated map point set and the updated correspondence relationship set.

In one embodiment, the construction module 706 is further configured to: based on a pose of the key frame corresponding to each updated map point in the updated map point set and the pixel coordinate of each updated map point on the corresponding key frame, convert the updated map point set into the 3D map point set.

In one embodiment, the construction module 706 is further configured to: based on a pose of the key frame corresponding to each updated map point in the updated map point set and the pixel coordinate of each updated map point on the corresponding key frame, convert the updated map point set into the 3D map point set.

In one embodiment, the construction module 706 is further configured to: reproject the 3D map point in the 3D map point set onto each corresponding key frame to obtain a reprojection point corresponding to the 3D map point; and count reprojection errors of the 3D map point on each key frame to obtain each total projection error of the 3D map point on the corresponding key frame.

Limitation of the fusion map construction apparatus can refer to the limitation of the fusion map construction method mentioned above, which are not repeated here. Each module in the above-mentioned fusion map construction apparatus can be implemented in whole or in part by a software, a hardware and a combination thereof. The above-mentioned modules can be embedded in or independent of a processor in the robot in the form of hardware, or can be stored in a memory of the robot in the form of software, so that the processor can call and execute the operations corresponding to the above-mentioned modules.

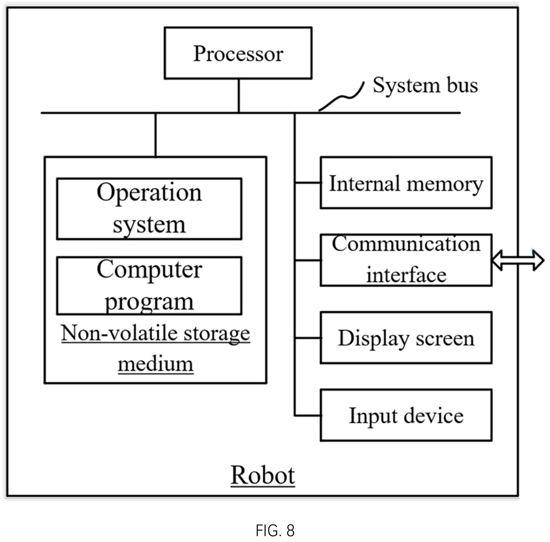

In one embodiment, a robot is provided, and an internal structure of the robot can be shown in FIG. 8. The robot includes a processor, a memory, a communication interface, a display screen, and an input device all connected through a system bus. The processor of the robot is configured to provide computing and control capabilities. The memory of the robot includes a non-volatile storage medium and an internal memory. The non-volatile storage medium stores an operation system and a computer program. The internal memory provides an operation environment for the operation system and the computer program in the non-volatile storage medium. The communication interface of the robot is configured to communicate with an external robot in a wired or wireless manner. The wireless manner may be achieved through WIFI, or an operator network, or NFC (near field communication), or other technologies. When the computer program is executed by the processor, the fusion map construction method is implemented. The display screen of the robot may be a liquid-crystal display screen or an electronic-ink display screen. The input device of the robot may be a touch layer covered on the display screen, or may be a button, or a trackball, or a touch pad all arranged at a housing of the robot, or may be an external keyboard, or an external touch pad, or an external mouse, etc.

Those skilled in the art can understand that the structure shown in FIG. 8 is merely a block diagram of a partial structure related to the solutions of the present disclosure, and does not constitute a limitation on the robot to which the solutions of the present disclosure are applied. The present robot may include more or fewer components than shown in the figure, or combine certain components, or have a different component arrangement.

In one embodiment, a robot is further provided, including a memory, a processor, and a computer-readable instruction stored in the memory and executable on the processor. The steps in the above-mentioned method embodiments are implemented when the processor executes the computer instruction.

In one embodiment, a computer-readable storage medium is provided, storing a computer program. The steps in the above-mentioned method embodiments are implemented when a processor executes the computer program.

In one embodiment, a computer program product or a computer program is provided. The computer program product or the computer program includes a computer instruction stored in a computer-readable storage medium. A processor of a robot reads the computer instruction from the computer-readable storage medium, and the processor executes the computer instruction, so that the robot performs the steps in the above-mentioned method embodiments.

It should be noted that user information (including but not limited to user device information, user personal information, etc.) and data (including but not limited to data used for analysis, stored data, displayed data, etc.) involved in the present disclosure are all information and data authorized by users or fully authorized by all parties.

It can be understood by those ordinary skilled in the art that all or a part of a process in the above method embodiments can be completed by instructing related hardware through a computer program. The computer program can be stored in a non-volatile computer-readable storage medium, and when executed, the computer program can include the processes of the above method embodiments. Any reference to a memory, or a database, or other media used in each embodiment provided by the present disclosure may include a non-volatile and/or volatile memory. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), or a graphene memory, etc. The volatile memory may include a random access memory (RAM), or an external cache memory, etc. As an illustration and not a limitation, RAM can be in various forms, such as a static random access memory (SRAM), or a dynamic random access memory (DRAM), etc. The database involved in each embodiment provided in the present disclosure may include at least one of a relational database and a non-relational database. The non-relational database may include a distributed database based on blockchain, etc., but is not limited thereto. The processor involved in each embodiment provided in the present disclosure may be a general-purpose processor, a central processor, a graphics processor, a digital signal processor, a programmable logic device, a data processing logic device based on quantum computing, or other processors, but is not limited thereto.

The technical features of the above-mentioned embodiments can be randomly combined. To make the description concise, not all possible combinations of the technical features in the above-mentioned embodiments are described. As long as there is no contradiction in the combinations of these technical features, these technical features should be considered to be within the scope of the present disclosure.

The above-mentioned embodiments only describe some implementations of the present disclosure, and the description thereof is relatively specific and detailed but cannot be construed as limiting the scope of the present disclosure. It should be pointed out that, for those ordinary skilled in the art, multiple variations and improvements can be made without departing from the concept of the present disclosure and all belong to the protection scope of the present disclosure. Therefore, the protection scope of the present disclosure should be subject to the attached claims.

## Claims

1. A fusion map construction method, applied to a robot arranged with a laser radar and an image collection device, wherein the method comprises following steps:
obtaining an image frame set collected by the image collection device and a laser pose data set obtained by mapping using the laser radar, and interpolating each image frame in the image frame set based on the laser pose data set to obtain each pose corresponding to each image frame;
obtaining a feature matching relationship between adjacent image frames, selecting a key frame set from the image frame set based on the pose and the feature matching relationship corresponding to each image frame, obtaining an initial map point set corresponding to the key frame set, and constructing a correspondence relationship between each key frame in the key frame set and each initial map point in the initial map point set to obtain a correspondence relationship set;
selecting a current key frame and a related key frame set corresponding to the current key frame in sequence from the key frame set, and updating the initial map point set and the correspondence relationship set based on a feature matching relationship between the current key frame and the related key frame set to obtain an updated map point set and an updated correspondence relationship set; and,
converting the updated map point set into a 3D map point set, and constructing a target fusion map based on the 3D map point set, the updated correspondence relationship set, and a pose of each key frame in the updated correspondence relationship set.

2. The method according to claim 1, wherein the step of interpolating each image frame in the image frame set based on the laser pose data set to obtain each pose corresponding to each image frame comprises following steps:
selecting a current image frame in sequence from the image frame set, and based on a current timestamp corresponding to the current image frame, obtaining a forward laser pose corresponding to the current timestamp, a forward timestamp corresponding to the forward laser pose, a backward laser pose, and a backward timestamp corresponding to the backward laser pose all from the laser pose data set; and,
interpolating the current timestamp, the forward timestamp, the backward timestamp, the forward laser pose, and the backward laser pose to obtain a pose corresponding to the current image frame.

3. The method according to claim 1, wherein the step of obtaining a feature matching relationship between adjacent image frames comprises following steps:
performing feature point extraction on each image frame in the image frame set to obtain each feature point corresponding to each image frame, wherein the feature point comprises a descriptor;
selecting a first image frame and a second image frame both adjacent to each image frame in sequence from the image frame set, and obtaining a first descriptor corresponding to the first image frame and a second descriptor corresponding to the second image frame;
traversing the first descriptor corresponding to the first image frame, taking a descriptor in the second descriptor that is most similar to the first descriptor as a first target descriptor, and constructing a first correspondence relationship between the first descriptor and the first target descriptor;
traversing the second descriptor corresponding to the second image frame, taking a descriptor in the first descriptor that is most similar to the second descriptor as a second target descriptor, and constructing a second correspondence relationship between the second descriptor and the second target descriptor; and,
matching a feature point corresponding to a descriptor in the first correspondence relationship with a feature point corresponding to a descriptor in the second correspondence relationship, wherein the descriptor in the first correspondence relationship has a consistent relationship with the descriptor in the second correspondence relationship, and obtaining a feature matching relationship between each first image frame and each second image frame in the image frame set.

4. The method according to any one of claims 1 to 3, wherein the step of selecting a key frame set from the image frame set based on the pose and the feature matching relationship corresponding to each image frame comprises following steps:
based on a pose corresponding to a first image frame adjacent to each image frame in the image frame set and a pose corresponding to a second image frame adjacent to the each image frame in the image frame set, calculating a corresponding change distance between each first image frame and each second image frame in the image frame set, and taking a second image frame with corresponding change distance greater than a preset change distance as the key frame in the key frame set; or,
based on a feature matching relationship between the first image frame and the second image frame both adjacent to the each image frame in the image frame set, calculating a feature matching rate corresponding to each first image frame and each second image frame both in the image frame set, and taking a second image frame with corresponding feature matching rate less than a preset matching rate as the key frame in the key frame set.

5. The method according to claim 4, wherein the step of based on a feature matching relationship between the first image frame and the second image frame both adjacent to the each image frame in the image frame set, calculating a feature matching rate corresponding to each first image frame and each second image frame both in the image frame set, comprises following steps:
counting a quantity of matched feature points corresponding to each image frame based on the feature matching relationship between the first image frame and the second image frame both adjacent to the each image frame in the image frame set; and,
calculating the feature matching rate corresponding to the first image frame and the second image frame both adjacent to the each image frame based on a total quantity of feature points corresponding to the first image frame corresponding to the image frame and the quantity of the matched feature points corresponding to the image frame.

6. The method according to claim 1, wherein the step of selecting a current key frame and a related key frame set corresponding to the current key frame in sequence from the key frame set, and updating the initial map point set and the correspondence relationship set based on a feature matching relationship between the current key frame and the related key frame set to obtain an updated map point set and an updated correspondence relationship set comprises following steps:
obtaining a preset distance, selecting the current key frame in sequence from the key frame set, and selecting the related key frame set corresponding to the current key frame from the key frame set based on both a pose corresponding to the current key frame and the preset distance;
performing feature matching on the current key frame and each related key frame in the related key frame set to obtain a feature matching relationship between the current key frame and each related key frame;
when an initial map point in the initial map point set corresponding to a current matched feature point of the current key frame is inconsistent with an initial map point corresponding to a current related matched feature point of the related key frame, merging the initial map point corresponding to the current matched feature point with the initial map point corresponding to the current related matched feature point to obtain an updated map point;
adding the updated map point to the initial map point set, deleting the initial map point corresponding to the current matched feature point and the initial map point corresponding to the current related matched feature point both from the initial map point set, and changing the initial map point corresponding to the current matched feature point and the initial map point corresponding to the current related matched feature point in the correspondence relationship set both to the updated map point to obtain an updated correspondence relationship and the updated map point; and,
traversing the key frame in the key frame set to obtain the updated map point set and the updated correspondence relationship set.

7. The method according to claim 1, wherein the updated map point set comprises a pixel coordinate of each updated map point on the corresponding key frame, and the step of converting the updated map point set into a 3D map point set comprises following steps:
based on a pose of the key frame corresponding to each updated map point in the updated map point set and the pixel coordinate of each updated map point on the corresponding key frame, converting the updated map point set into the 3D map point set.

8. The method according to claim 1, wherein the step of constructing a target fusion map based on the 3D map point set, the updated correspondence relationship set, and a pose of each key frame in the updated correspondence relationship set comprises following steps:
calculating each total reprojection error of each 3D map point in the 3D map point set on each corresponding key frame, and when the total reprojection error is greater than a preset pixel number, deleting a correspondence relationship between the 3D map point and the corresponding key frame from the updated correspondence relationship set to obtain an intermediate correspondence relationship set;
selecting a current 3D map point in sequence from the 3D map point set, calculating a quantity of corresponding key frames corresponding to the current 3D map point, and when a value of the quantity of the corresponding key frames is less than a preset number, deleting the current 3D map point from the 3D map point set and deleting a correspondence relationship between the current 3D map point and the corresponding key frame corresponding to the current 3D map point from the intermediate correspondence relationship set to obtain a target 3D map point set and a target correspondence relationship set; and,
constructing the target fusion map based on the target 3D map point set, the target correspondence relationship set, and a pose of each key frame in the target correspondence relationship set.

9. The method according to claim 8, wherein the step of calculating each total reprojection error of each 3D map point in the 3D map point set on each corresponding key frame comprises following steps:
reprojecting the 3D map point in the 3D map point set onto each corresponding key frame to obtain a reprojection point corresponding to the 3D map point; and,
counting reprojection errors of the 3D map point on each key frame to obtain each total projection error of the 3D map point on the corresponding key frame.

10. A fusion map construction apparatus, comprising:
an interpolation module, configured to: obtain an image frame set collected by an image collection device and a laser pose data set obtained by mapping using a laser radar, and interpolate each image frame in the image frame set based on the laser pose data set to obtain each pose corresponding to each image frame;
a match module, configured to: obtain a feature matching relationship between adjacent image frames, select a key frame set from the image frame set based on the pose and the feature matching relationship corresponding to each image frame, obtain an initial map point set corresponding to the key frame set, and construct a correspondence relationship between each key frame in the key frame set and each initial map point in the initial map point set to obtain a correspondence relationship set;
an update module, configured to: select a current key frame and a related key frame set corresponding to the current key frame in sequence from the key frame set, and update the initial map point set and the correspondence relationship set based on a feature matching relationship between the current key frame and the related key frame set to obtain an updated map point set and an updated correspondence relationship set; and,
a construction module, configured to: convert the updated map point set into a 3D map point set, and construct a target fusion map based on the 3D map point set, the updated correspondence relationship set, and a pose of each key frame in the updated correspondence relationship set.

11. The apparatus according to claim 10, wherein the interpolation module is further configured to:
select a current image frame in sequence from the image frame set, and based on a current timestamp corresponding to the current image frame, obtain a forward laser pose corresponding to the current timestamp, a forward timestamp corresponding to the forward laser pose, a backward laser pose, and a backward timestamp corresponding to the backward laser pose all from the laser pose data set; and,
interpolate the current timestamp, the forward timestamp, the backward timestamp, the forward laser pose, and the backward laser pose to obtain a pose corresponding to the current image frame.

12. The apparatus according to claim 10, wherein the match module is further configured to:
perform feature point extraction on each image frame in the image frame set to obtain each feature point corresponding to each image frame, wherein the feature point comprises a descriptor;
select a first image frame and a second image frame both adjacent to each image frame in sequence from the image frame set, and obtain a first descriptor corresponding to the first image frame and a second descriptor corresponding to the second image frame;
traverse the first descriptor corresponding to the first image frame, take a descriptor in the second descriptor that is most similar to the first descriptor as a first target descriptor, and construct a first correspondence relationship between the first descriptor and the first target descriptor;
traverse the second descriptor corresponding to the second image frame, take a descriptor in the first descriptor that is most similar to the second descriptor as a second target descriptor, and construct a second correspondence relationship between the second descriptor and the second target descriptor; and,
match a feature point corresponding to a descriptor in the first correspondence relationship with a feature point corresponding to a descriptor in the second correspondence relationship, wherein the descriptor in the first correspondence relationship has a consistent relationship with the descriptor in the second correspondence relationship, and obtain a feature matching relationship between each first image frame and each second image frame in the image frame set.

13. The apparatus according to any one of claims 10 to 12, wherein the match module is further configured to:
based on a pose corresponding to a first image frame adjacent to each image frame in the image frame set and a pose corresponding to a second image frame adjacent to the each image frame in the image frame set, calculate a corresponding change distance between each first image frame and each second image frame in the image frame set, and take a second image frame with corresponding change distance greater than a preset change distance as the key frame in the key frame set; or,
based on a feature matching relationship between the first image frame and the second image frame both adjacent to the each image frame in the image frame set, calculate a feature matching rate corresponding to each first image frame and each second image frame both in the image frame set, and take a second image frame with corresponding feature matching rate less than a preset matching rate as the key frame in the key frame set.

14. The apparatus according to claim 10, wherein the update module is further configured to:
based on a pose corresponding to a first image frame adjacent to each image frame in the image frame set and a pose corresponding to a second image frame adjacent to the each image frame in the image frame set, calculate a corresponding change distance between each first image frame and each second image frame in the image frame set, and take a second image frame with corresponding change distance greater than a preset change distance as the key frame in the key frame set; or,
based on a feature matching relationship between the first image frame and the second image frame both adjacent to the each image frame in the image frame set, calculate a feature matching rate corresponding to each first image frame and each second image frame both in the image frame set, and take a second image frame with corresponding feature matching rate less than a preset matching rate as the key frame in the key frame set.

15. The apparatus according to claim 10, wherein the update module is further configured to:
obtain a preset distance, select the current key frame in sequence from the key frame set, and select the related key frame set corresponding to the current key frame from the key frame set based on both a pose corresponding to the current key frame and the preset distance;
perform feature matching on the current key frame and each related key frame in the related key frame set to obtain a feature matching relationship between the current key frame and each related key frame;
when an initial map point in the initial map point set corresponding to a current matched feature point of the current key frame is inconsistent with an initial map point corresponding to a current related matched feature point of the related key frame, merge the initial map point corresponding to the current matched feature point with the initial map point corresponding to the current related matched feature point to obtain an updated map point;
add the updated map point to the initial map point set, delete the initial map point corresponding to the current matched feature point and the initial map point corresponding to the current related matched feature point both from the initial map point set, and change the initial map point corresponding to the current matched feature point and the initial map point corresponding to the current related matched feature point in the correspondence relationship set both to the updated map point to obtain an updated correspondence relationship and the updated map point; and,
traverse the key frame in the key frame set to obtain the updated map point set and the updated correspondence relationship set.

16. The apparatus according to claim 10, wherein the construction module is further configured to:
based on a pose of the key frame corresponding to each updated map point in the updated map point set and the pixel coordinate of each updated map point on the corresponding key frame, convert the updated map point set into the 3D map point set.

17. The apparatus according to claim 10, wherein the construction module is further configured to:
calculate each total reprojection error of each 3D map point in the 3D map point set on each corresponding key frame, and when the total reprojection error is greater than a preset pixel number, delete a correspondence relationship between the 3D map point and the corresponding key frame from the updated correspondence relationship set to obtain an intermediate correspondence relationship set;
select a current 3D map point in sequence from the 3D map point set, calculate a quantity of corresponding key frames corresponding to the current 3D map point, and when a value of the quantity of the corresponding key frames is less than a preset number, delete the current 3D map point from the 3D map point set and delete a correspondence relationship between the current 3D map point and the corresponding key frame corresponding to the current 3D map point from the intermediate correspondence relationship set to obtain a target 3D map point set and a target correspondence relationship set; and
construct the target fusion map based on the target 3D map point set, the target correspondence relationship set, and a pose of each key frame in the target correspondence relationship set.

18. The apparatus according to claim 17, wherein the construction module is further configured to:
reproject the 3D map point in the 3D map point set onto each corresponding key frame to obtain a reprojection point corresponding to the 3D map point; and,
count reprojection errors of the 3D map point on each key frame to obtain each total projection error of the 3D map point on the corresponding key frame.

19. A robot, arranged with a laser radar and an image collection device, comprising a memory and a processor, wherein the memory stores a computer-readable instruction, and the processor is configured to execute the computer-readable instruction to implement the steps of the method according to any one of claims 1 to 9.

20. A computer-readable storage medium, storing a computer program, wherein the computer program is executed by a processor to implement the steps of the method according to any one of claims 1 to 9.
